# EUROPEAN PATENT APPLICATION

(11) **EP 2 808 639 A1**
(43) Date of publication of application: **03.12.2014**
(21) Application number: 13741236.7
(22) Date of filing: 24.01.2013
(51) Int. Cl.: F28D 15/02

(54) **HEAT TRANSPORT APPARATUS**

(30) Priority: 27.01.2012 JP 2012015031
(71) Applicant: Furukawa Electric Co., Ltd., Chiyoda-ku Tokyo 100-8322 (JP)
(72) Inventor: HIRASAWA Takeshi, Tokyo 100-8322 (JP); IKEDA Masami, Tokyo 100-8322 (JP); KIMURA Yuichi, Tokyo 100-8322 (JP); SHIMADA Mamoru, Tokyo 100-8322 (JP); NAKAMURA Toshiaki, Tokyo 100-8322 (JP)
(74) Representative: Jordan, Volker Otto Wilhelm
(86) International application number: PCT/JP2013/051444
(87) International publication number: WO 2013/111815

(57) **Abstract**

Provided is a heat transport apparatus having a heat pipe as a heat transport unit, that can suppress a decrease in heat transport efficiency by condensation of an working fluid, even under a low temperature condition of at or below a melting point of the working fluid or less as much as possible is provided in heat transport apparatus comprising the heat pipe as heat transport unit. The heat transport apparatus that is thermally connectable to an object to be temperature adjusted includes a plurality of heat pipes (3) thermally connected along a heat transport direction to provide a heat transport path. The heat transport apparatus is used in an environment at or below a melting point of a working fluid of at least one heat pipe among the plurality of heat pipes (3).

## Description

### Technical Field

The present disclosure relates to a heat transport apparatus, and particularly to a heat transport apparatus having a heat pipe as a heat transport unit.

### Background Art

Heat pipes are used as heat transport units in cooling or heating various electronic components. For example, Patent Document 1 discloses providing a heat pipe, as a heat transport unit, between a heater element and a radiation fin.

It is also known to thermally connect a plurality of heat pipes along a heat transport direction. For example, Patent Document 2 discloses connecting a plurality of flat plate heat pipes, each not exceeding a critical length at which a heat transport performance extremely decreases, to each other using a means having a reduced junction thermal resistance to thereby obtain a connection structure having a total overall length with which a desired length is obtained.

Patent Document 3 discloses a connection type heat pipe in which a plurality of heat pipe units each having a reducing section formed at one end thereof and a nozzle portion for injecting a working fluid continuously formed at a tip of the reducing section are alternately and continuously connected to each other with their corresponding end portions being joined in a closely attached manner at the flat portion.

However, none of the aforementioned documents disclose using heat pipes in an environment at or below a temperature of a melting point of the working fluid.

Techniques that takes into consideration the lowering of heat transport efficiency due to freezing of a working fluid are disclosed in Patent Documents 4 and 5. With the inventions described in these documents, condensing capability of some of the heat pipes is decreased by connecting less number of fins to some of the heat pipes than to other heat pipes, to thereby cause the some of the heat pipes to positively operate under a low temperature.

### Document List

### Patent Document(s)

Patent Document 1: Japanese Laid-Open Patent Publication No. 2006-310739
Patent Document 2: Japanese Patent No. 4069302
Patent Document 3: Japanese Laid-Open Utility-Model Publication No. S61-84382
Patent Document 4: Japanese Laid-Open Patent Publication No. 2001-267773
Patent Document 5: Japanese Laid-Open Patent Publication No. H07-190655

### Summary of Invention

### Technical Problem

It is an object of the present disclosure to provide a heat transport apparatus that includes heat pipes as a heat transport unit and that can suppress the lowering of heat transport efficiency due to freezing of the working fluid as much as possible even under a low temperature condition at or below a melting point of the working fluid.

### Solution to Problem

In order to achieve the above object, the present disclosure adopted the following configuration.

That is, according to a first aspect of the present disclosure, a heat transport apparatus that is thermally connectable to an object to be temperature adjusted includes a plurality of heat pipes thermally connected along a heat transport direction to form a heat transport path. It is preferable that the heat transport apparatus is used under an environment at or below a melting point of a working fluid of at least one heat pipe among the plurality of heat pipes.

According to a second aspect of the present disclosure, one end of the heat transport path is thermally connected to a temperature adjusting mechanism, and types and/or numbers of the heat pipes are selected in such a manner that a heat transport capability at the one end is greater than a heat transport capability at another end.

According to a third aspect of the present disclosure, the heat transport apparatus further includes a heater thermally connected to at least one of the plurality of heat pipes.

According to a fourth aspect of the present disclosure, a part of or an entirety of the heat transport path is accommodated in an accommodating member that is thermally connectable to the plurality of heat pipes and the object to be temperature adjusted.

According to a fifth aspect of the present disclosure, a working fluid of at least one heat pipe among the plurality of heat pipes has a melting point different from a melting point of that of the other heat pipe.

According to a sixth aspect of the present disclosure, neighboring heat pipes are thermally connected by thermally connecting end portion side surfaces thereof with each other.

According to a seventh aspect of the present disclosure, neighboring heat pipes are thermally connected by thermally connecting tip end surfaces thereof with each other.

According to an eighth aspect of the present disclosure, the object to be temperature adjusted represents a plurality of objects to be temperature adjusted.

According to a ninth aspect of the present disclosure, the plurality of objects to be temperature adjusted are a plurality of battery cells.

### Advantageous Effects of Invention

According to the present disclosure, since a plurality of heat pipes are thermally connected along a heat transport direction to form a heat transport path, a decrease in the heat transport efficiency due to freezing of a working fluid can be suppressed as much as possible even in a low temperature condition of at or below a melting point of the working fluid.

### Brief Description of Drawings

[FIG. 1] FIG. 1 is a perspective view showing a heat transport apparatus of the present disclosure in a state where it is thermally connected to a group of battery cells that is an object to be temperature adjusted.
[FIG. 2] FIG. 2 is an exploded perspective view showing the heat transport apparatus of FIG. 1.
[FIG. 3] FIG. 3 is a top plan view showing an arrangement of heat pipes in the heat transport apparatus of FIG. 1.
[FIG. 4] FIGS. 4A and 4B are perspective views showing a connecting portion of the heat pipes in the heat transport apparatus of FIG. 1.
[FIG.5] FIGS. 5A and 5B are perspective views showing another configuration of the connecting portion of the heat pipes.
[FIG. 6] FIGS. 6A and 6B are perspective views showing another configuration of the connecting portions of the heat pipes.
[FIG. 7] FIG. 7 is a top plan view showing another configuration of the arrangement of the heat pipes in the heat transport apparatus.
[FIG.8] FIG. 8 is a top plan view showing another configuration of the arrangement of the heat pipes in the heat transport apparatus.
[FIG. 9] FIG. 9 is a perspective view showing the heat transport apparatus of the present disclosure in a state where the heat transport apparatus is thermally connected to a group of battery cells (battery component) that is an object to be temperature adjusted.
[FIG. 10] FIG. 10 is an exploded perspective view showing the heat transport apparatus of FIG. 9.
[FIG. 11] FIG. 11 is a cross sectional view of the heat transport apparatus of FIG. 9.
[FIG. 12] FIG. 12 is a perspective view showing the heat transport apparatus of the present disclosure in a state where the heat transport apparatus is thermally connected to a group of battery cells (battery components) that are an object to be temperature adjusted.
[FIG. 13] FIG. 13 is an exploded perspective view showing the heat transport apparatus of FIG. 13.
[FIG.14] FIG. 14 is a perspective view showing a battery temperature adjustment apparatus provided with the heat transport apparatus of the present disclosure.
[FIG. 15] FIG. 15 is a top plan view of the apparatus of FIG. 14.
[FIG. 16] FIG. 16 is an exploded perspective view showing a cooling unit 30.
[FIG. 17] FIG. 17 is a cross sectional view showing a cooling unit 30.

### Description of the Preferred Embodiments

Hereinafter, embodiments of the present disclosure will be described in detail.

### [Embodiment 1]

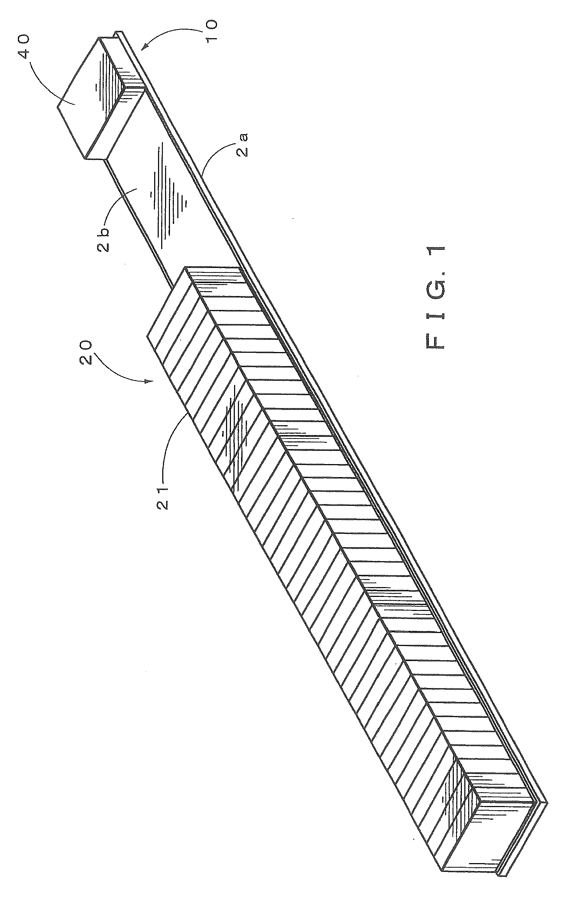

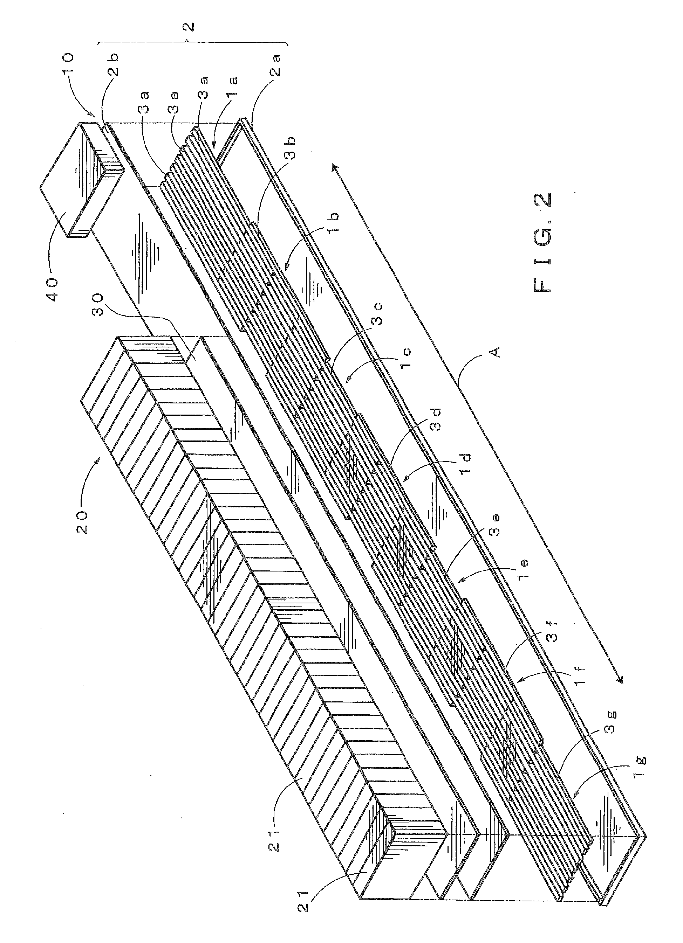

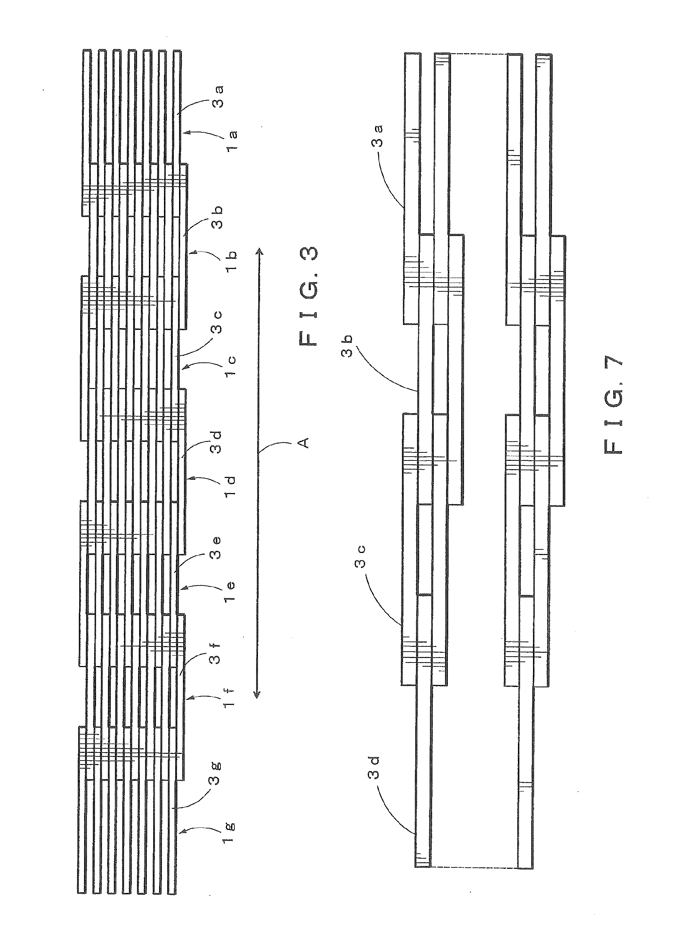

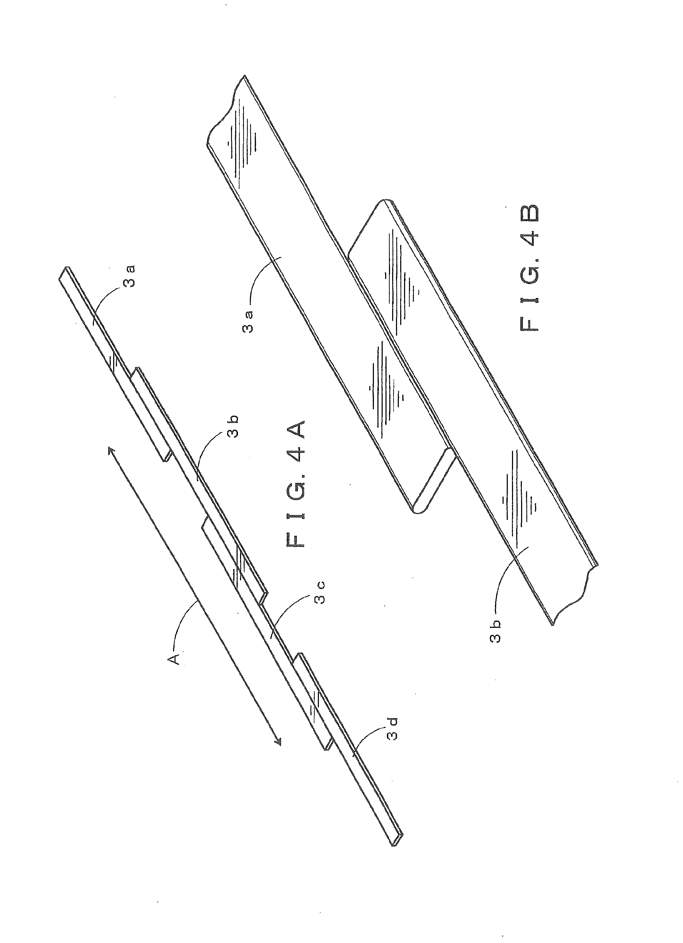

FIG. 1 is a perspective view showing a heat transport apparatus of the present disclosure in a state where the heat transport apparatus is thermally connected to a group of battery cells 20 including a plurality of battery cells 21 as an object to be temperature adjusted. FIG. 2 is an exploded perspective view showing the heat transport apparatus of FIG. 1. FIG. 3 is a top plan view showing one mode of arrangement of heat pipes in the heat transport apparatus of FIG. 1. FIGS. 4A and 4B are perspective views showing a connecting portion between the heat pipes in the heat transport apparatus of FIG. 1.

The heat transport apparatus 10 includes groups 1a to 1g of a plurality of heat pipes 3 that are arranged in parallel and each having a substantially rectangular cross section. The groups 1a to 1g each includes a plurality of heat pipes 3 (in this embodiment, seven heat pipes) arranged in parallel. An end portion of the group 1a and an end portion of the group 1b are thermally connected.

Similarly, the group 1b and the group 1c are thermally connected; the group 1c and the group 1d are thermally connected; the group 1d and the group 1e are thermally connected; the group 1e and the group 1f are thermally connected; and the group 1f and the group 1g are thermally connected.

In such a manner, a heat transport path extends along a heat transport direction A by thermally connecting the end portions of the heat pipes 3 in turn. In this embodiment, the heat pipes 3 constituting to the groups 1a to 1g have the same shape and the same working fluid, respectively. However, those of different shapes and different working fluids may of course be used.

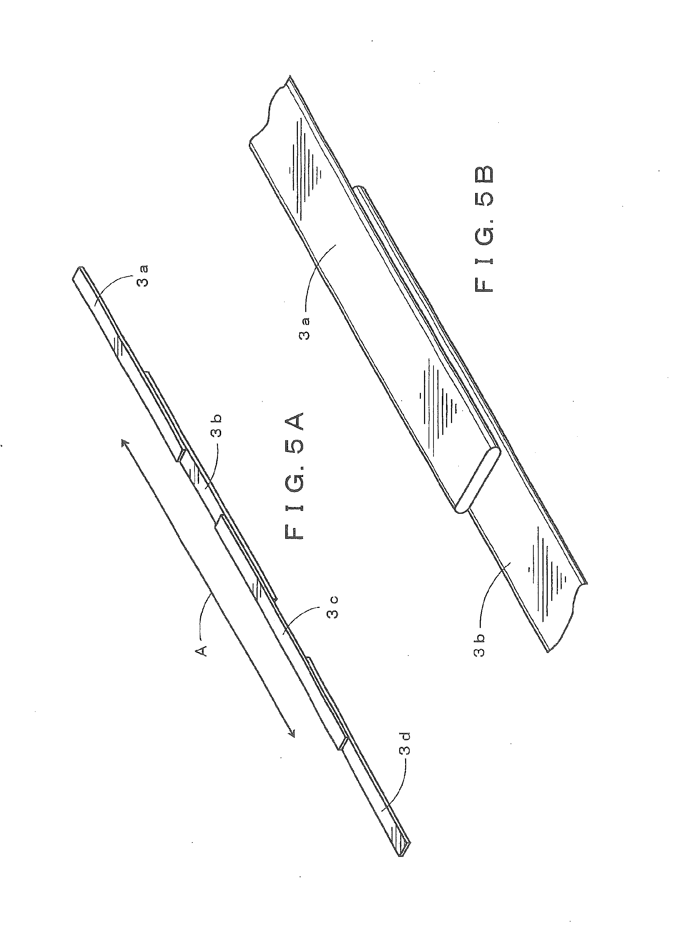

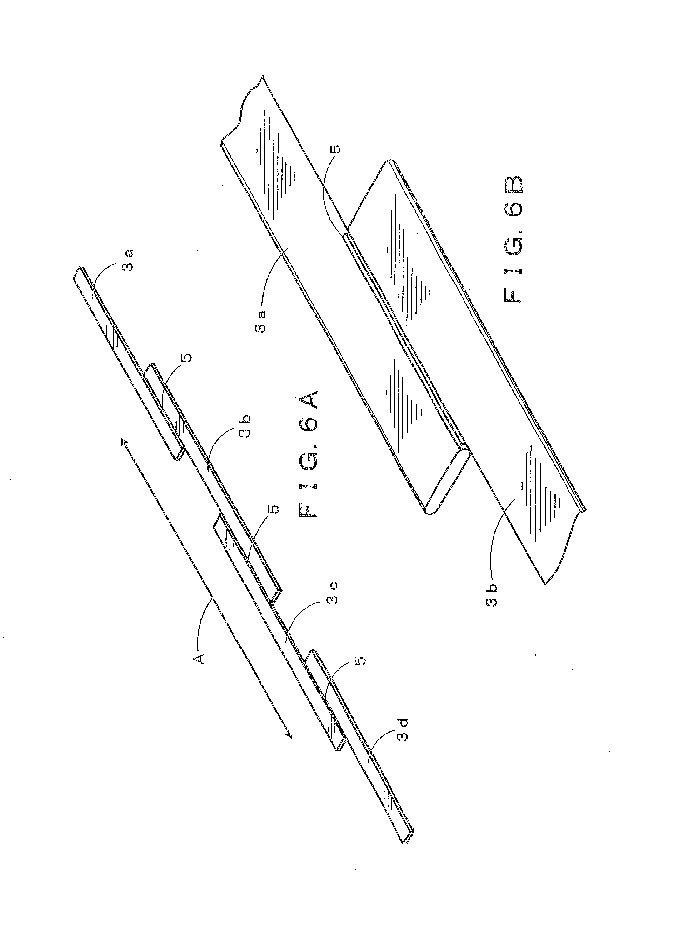

A method of connecting the heat pipes 3 in the heat transport direction will be described. As shown in FIGS. 4A and 4B, in this embodiment, an end portion side surface of the heat pipe 3a and an end portion side surface of the heat pipe 3b are thermally connected; an end portion side surface of the heat pipe 3b and an end portion side surface of the heat pipe 3c are thermally connected; an end portion side surface of the heat pipe 3c and an end portion side surface of the heat pipe 3d are thermally connected; an end portion side surface of the heat pipe 3d and an end portion side surface of the heat pipe 3e are thermally connected; an end portion side surface of the heat pipe 3e and an end portion side surface of the heat pipe 3f are thermally connected; and an end portion side surface of the heat pipe 3f and an end portion side surface of the heat pipe 3g are thermally connected. Thereby, a total of seven heat pipes 3a to 3g are thermally connected along a heat transport direction A. The method of connecting the heat pipes 3 is not limited to connection between end portions of narrow-width surfaces as shown in FIGS. 4A and 4B, and end portions of wide-width surfaces may be connected as shown in FIGS. 5A and 5B. Also, as shown in FIGS. 6A and 6B, a thermal resistance member 5 may be provided at a part of the connecting portion to adjust a heat transport rate of a part of the heat transport path. The thermal resistance member may be a thermal sheet, solder, a metal plate, or the like, that can adjust a thermal resistance value and a thermal conductivity by physical properties, shape or the like thereof, such as thickness and specific heat.

The aforementioned heat pipe 3 includes, for example, a sealed container made of a metal having a good thermal conductivity, such as copper and aluminum, or an alloy of such a metal, and a working fluid enclosed in the sealed container in a depressurized state. The shape of the container may be, in addition to a shape having a substantially rectangular cross section of the present embodiment, a shape having a flattened cross section, a round shape, a plate shape, or the like. The heat pipe may be of a type having a wick formed on an inner surface of the container with a mesh or a coil of a metal wire or a porous metal, and of a type having grooves formed on an inner surface of the container. A space serving as a channel for the working fluid is also provided inside the heat pipe 3. Heat transportation is performed by a phase change between evaporation (heat receiving section) and condensation (heat radiating section) and an internal movement of the working fluid contained in this space. The working fluid includes, but not limited to, water, hydrochlorofluoro carbons such as HCFC-22, hydrofluorocarbons such as HFCR134a, HFCR407C, HFCR410A and HFC32, hydrofluoroolefins such as HFO1234yf, carbon dioxide gas, ammonia and propane. Among these, taking the performance and influences on global environment into consideration, water, carbon dioxide gas, and hydrofluoroolefin are preferable.

A total of 49 heat pipes 3 constituting the groups 1a to 1g are accommodated in an accommodating member 2. The accommodating member 2 includes an accommodating container 2a and a flat plate cover 2b, and is thermally connected to the group of battery cells 20 and the heat pipes 3. Although a material of the accommodating member 2 is not particularly limited, considering a good thermal conductivity, it is preferable to use a metal such as copper and aluminum at least at a connecting portion between an object to be temperature adjusted and a temperature adjusting mechanism. Further, in this embodiment, a sheet 30 having a good thermal conductivity is disposed between the group of battery cells 20 and the accommodating member 2. A material of such a sheet 30 is not particularly limited, and may be a so-called thermal sheet, thermally conductive grease and a putty containing silicone or acrylic rubber as a major component. Also, a temperature adjusting mechanism 40 (in this embodiment, a heater) is thermally connected to an end portion of the cover 2b.

Hereinafter, an operation of the aforementioned heat transport apparatus 10 will be described for a case in which water is used as a working fluid. It is known that a battery 21 such as a lithium ion secondary battery has an appropriate operating temperature range and an output decreases under a low temperature condition (e.g., 0 C° and below). Therefore, in order to carry out an appropriate operation under such a condition, it is necessary to preheat the battery to increase the temperature to an appropriate operating temperature. Since the heat transport apparatus 10 has a heat transport path provided by the heat pipes 3, heat from the heater 40 can be efficiently transported to the battery cells 21.

Also, when a long heat transport path (e.g., a heat transport path having a length which is greater than 50 cm, and particularly, greater than or equal to 60 cm (an upper limit is preferably less than or equal to 2 m)) is constituted by a single long heat pipe, there is a drawback that the heat transport efficiency decreases due to freezing of the working fluid in the heat pipe. In other words, even though the working fluid melted by heat from the heater 40 turns into vapor in the vicinity of the heater 40 (heat generation section) and the vapor moves inside the heat pipe towards a low temperature section, the vapor is cooled at the low temperature section and freezes. Accordingly, there is a drawback that the working fluid does not circulate towards the heat generation section and will be depleted in the vicinity of the heat generation section.

According to the present disclosure, since a plurality of (in this embodiment, a total of seven) heat pipes 3 are thermally connected along the heat transport direction A, a decrease in the heat transport efficiency due to the freezing of the heat pipe can be prevented as compared to a case in which heat is transported using a single long heat pipe. That is, in a case of a short heat pipe, even in a situation where the working fluid might freeze, since heat conduction takes place in the container and at the wick portion, the freezing of the working fluid can be prevented by the heating. Also, since a plurality of short heat pipes are thermally connected, heat pipes that are far from the heat source can be operated and heat can be transported over a long-distance. In addition to a heat pipe that is not frozen, such an effect is also effective to a heat transport path that is already frozen. Since short heat pipes restore their function by being thawed by heat conduction through the container and the wick portion, heat can be transferred well to the next heat pipe in the heat transport direction. Since the function of the heat pipe recovers in turn, a good heat transport is finally restored in the entire path. Taking such a freezing problem into consideration, the heat pipe 3 has a length of preferably less than or equal to 50 cm, particularly preferably less than or equal to 40 cm, and further preferably less than or equal to 30 cm.

Further, as a temperature adjusting mechanism, a cooling mechanism may be connected to the heat transport apparatus in addition to the heater 40, and when the battery is overheated, the heat of the battery can be efficiently transported to the cooling mechanism by the heat pipe 3. Such a cooling mechanism may be formed integral with the heater 40 or may be formed separately and connected to the heater 40.

In the embodiment above, the groups (1a to 1g) each including seven heat pipes are arranged, but it is not limited to such an arrangement, and various arrangements are possible. Also, the plurality of heat pipes 3 need not be necessarily identical, and those having different shapes (lengths, diameters) or different working fluids may be used in combination.

For example, in the embodiment shown in FIG. 7, the heat pipes 3 are disposed in such a manner that a number of heat pipes 3a constituting one end of the heat transport path is maximum, and a density of the heat pipes 3d constituting the other end of the heat transport path is minimum. At an intermediate portion (between the one end and the other end) of the heat transport path, the number of heat pipes does not increase from one end to the other end of the heat transport path (a heat transport capability does not increase) except at junction portions of the heat pipes. In such an embodiment, it is preferable to thermally connect a side at which the heat pipe density is high (the 3a side) to the temperature adjusting mechanism such as the cooling mechanism. Thereby, it is possible to sufficiently deal with an amount of heat transport that increases towards the cooling mechanism side.

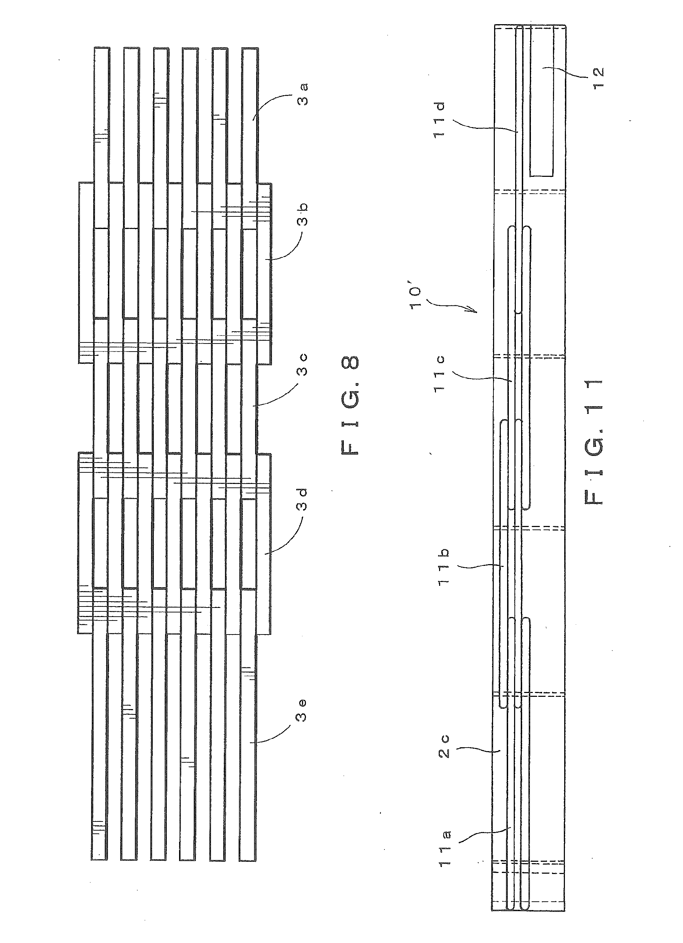

Further, in the embodiment shown in FIG. 8, a length of the heat pipes 3e constituting one end of the heat transport path is the greatest, and a length of the heat pipes 3a constituting the other end of the heat transport path is the shortest. In such an embodiment, it is preferable to connect the short heat pipe side (the other end, the 3a side) to the temperature adjusting mechanism such as the cooling mechanism. Since the heat pipe has a higher heat transport capability as the length becomes shorter, it is also possible to sufficiently deal with an amount of heat transport that increases towards the cooling mechanism side.

Furthermore, in the aforementioned embodiment, an embodiment using the heater as the temperature adjusting mechanism 40 was described. However, the heater need not be necessarily connected to the heat transport apparatus, and, for example, it may be configured to drive only a part of the battery cells that are connected to the heat transport apparatus 10, and to heat other battery cells connected to the heat transport apparatus with the generated heat.

In such an embodiment, although it is not necessarily required to connect the temperature adjusting mechanism 40, the temperature adjusting mechanism 40 as the cooling mechanism may be connected to the heat transport apparatus 10. Also, by providing the aforementioned thermal resistance member at a connecting portion of the heat pipes 3 near the cooling mechanism (e.g., a connecting portion between the heat pipes 3a and 3b in FIG. 2), a heat loss produced due to transportation of heat to the cooling mechanism during the heating of the battery cells 21 can be suppressed.

Note that, the aforementioned heater includes, but not particularly limited to, an electric heater, Peltier element, and the like, and the cooling mechanism may be a fin, a water-cooled mechanism, a heat pump, and the like. Further, in the above embodiment, a case in which the working fluids of the heat pipes 3 were assumed to be the same was described, but the heat pipes having different working fluids may be used in combination. Further, instead of connecting the end portion side surfaces, the heat pipes may be connected by connecting the tip end surfaces to each other. The object to be temperature adjusted is not limited to battery cells, and the heat transport apparatus of the present disclosure is applicable to any machines, appliances and devices that require cooling and/or heating. It is particularly preferable for temperature adjustment of machines, appliances and devices, such as automotive batteries for cold places, which are assumed to be used at an operating temperature of less than or equal to 0 °C.

### [Embodiment 2]

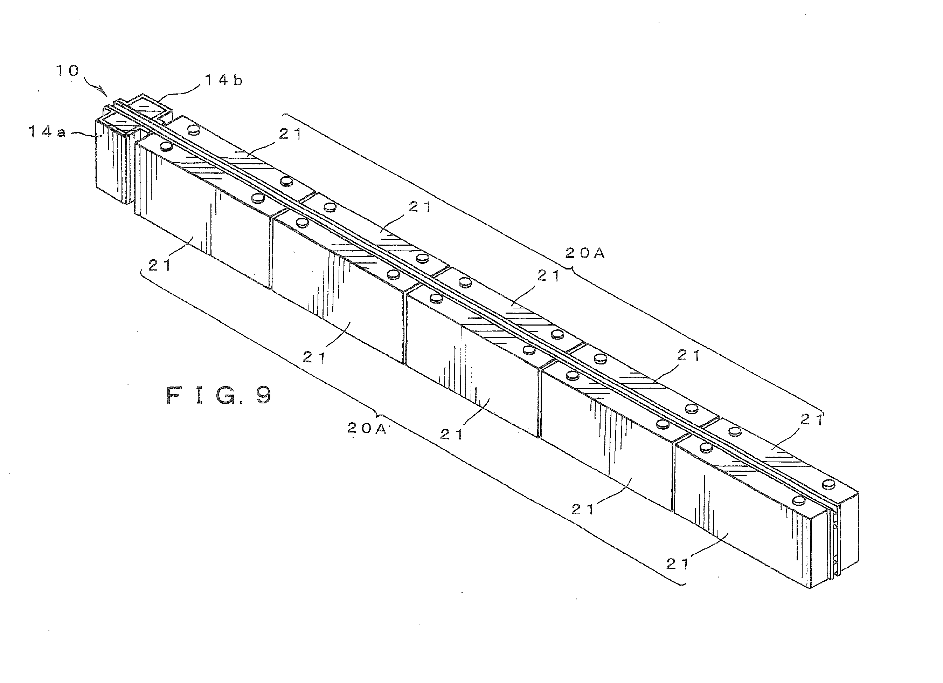

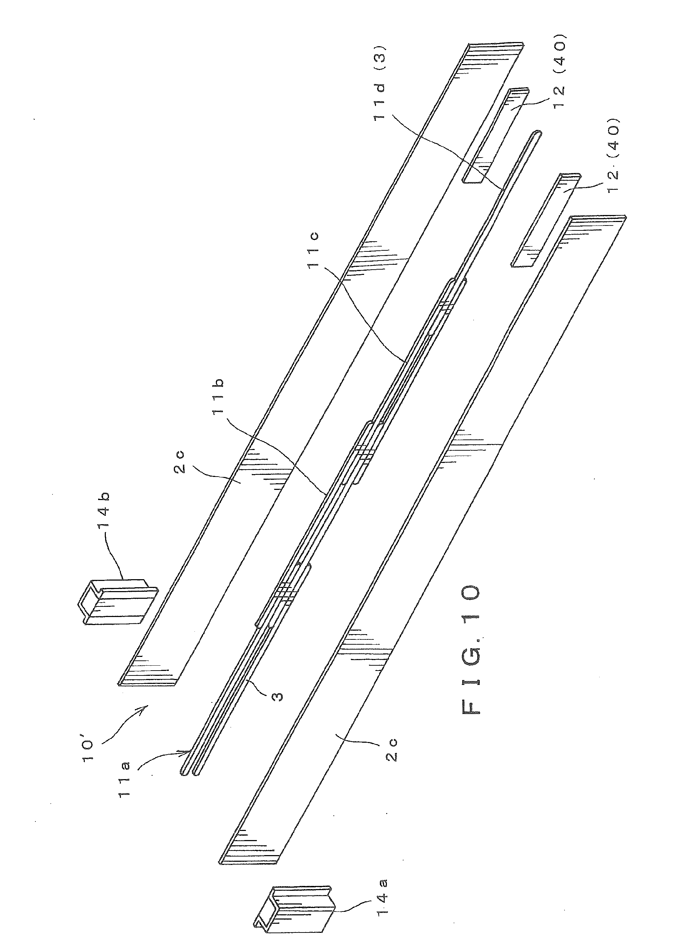

Another embodiment of the present disclosure will be described below. FIG. 9 is a perspective view showing the heat transport apparatus of the present disclosure in a state where the heat transport apparatus is thermally connected to a battery component 20A comprising a group of battery cells 21 that is an object to be temperature adjusted. FIG. 10 is an exploded perspective view showing the heat transport apparatus of FIG. 9. FIG. 11 is a cross sectional view of the heat transport apparatus of FIG. 9.

In this embodiment, the heat transport apparatus is disposed between the battery components 20A each including a plurality of batteries arranged therein. It is to be noted that the battery component 20A may include a single battery cell.

The heat transport apparatus 10' includes groups 11a to 11c each including a plurality of heat pipes 3 that are arranged in parallel and each having a substantially rectangular cross section as well as a heat pipe 3 (11d) disposed at an end portion.

Similarly to Embodiment 1, a heat transport path extends along the heat transport direction A by thermally connecting the end portions of the heat pipes 3 in turn. In this embodiment, the heat pipes 3 constituting groups 1a to 1d have the same shape and the same working fluid, respectively. However, those of different shapes and different working fluids may of course be used.

The heat pipes 3 are connected with each other in a manner similar to the configuration of FIGS. 4A and 4B, and may also be, similarly to Embodiment 1, connected in a manner of the configuration as shown in FIGS. 5A and 5B or FIGS. 6A and 6B. The heat pipes 3 of various structures described in Embodiment 1 can be used.

A total of seven heat pipes 3 constituting the groups 11a to 11d are accommodated in the accommodating member 2. The accommodating member 2 includes two plates 2c each having a flat plate shape, and is thermally connected to the battery cells 21 and the heat pipes 3. Although the material of the accommodating member 2 is not particularly limited, considering a good thermal conductivity, it is preferable to use a metal such as copper and aluminum at a connecting portion between at least an object to be temperature adjusted and a temperature adjusting mechanism.

A temperature adjusting mechanism 40 is thermally connected to an end portion of the plate 2c. The temperature adjusting mechanism 40 is, in this embodiment, a heater (specifically, a PTC heater) 12. In this embodiment, when a sheet-like PTC heater is used, since the temperature adjusting mechanism 40 can be accommodated between the plates 2c, a temperature controller can be dispensed with and a size of an entire apparatus can be minimized.

Hereinafter, an operation of the aforementioned heat transport apparatus 10' will be described for a case in which water is used as a working fluid. It is known that a battery such as a lithium ion secondary battery has an appropriate operating temperature range and an output decreases under a low temperature condition (e.g., 0 °C or below). Therefore, in order to carry out an appropriate operation under such a condition, it is necessary to preheat the battery to increase the temperature to an appropriate operating temperature. Since the heat transport apparatus 10' has a heat transport path formed with the heat pipes 3, heat from the heater 40 can be efficiently transported to the battery cells 21. Although the heater 40 is provided in this embodiment, it is to be noted that, for example, similarly to Embodiment 1, some of the battery cells among the battery cells connected to the heat transport apparatus 10 may be driven and generate heat, and other battery cells connected to the heat transport apparatus may be heated by the heat thus generated.

Also, when a long heat transport path (e.g., a heat transport path having a length which is greater than 50 cm, and particularly, greater than or equal to 60 cm (an upper limit is preferably less than or equal to 2 m)) is constituted by a single long heat pipe, there is a drawback that the heat transport efficiency decreases due to freezing of the working fluid in the heat pipe. In other words, even though the working fluid melted by the heat from the heater 12 turns into vapor in the vicinity of the heater 12 (heat generation section) and the vapor moves inside the heat pipe towards a low temperature section, the vapor is cooled at the low temperature section and freezes. Accordingly, there is a drawback that the working fluid does not circulate towards the heat generation section and will be depleted in the vicinity of the heat generation section.

According to the present disclosure, since a plurality of (in this embodiment, a total of four) heat pipes 3 are thermally connected along the heat transport direction A, a decrease in the heat transport efficiency due to the freezing of the heat pipe can be prevented as compared to a case in which heat is transported using a single long heat pipe. That is, in a case of a short heat pipe, even in a situation where the working fluid might freeze, since heat conduction takes place in the container and at the wick portion, the freezing of the working fluid can be prevented by the heating. Also, since a plurality of short heat pipes are thermally connected, heat pipes that are far from the heat source can be operated and heat can be transported over a long-distance. In addition to a heat pipe that is not frozen, such an effect is also effective to a heat transport path that is already frozen. Since short heat pipes are thawed by heat conduction of the container and the wick portion and restore the function, heat can be transferred well to the next heat pipe in the heat transport direction. Since the function of the heat pipe recovers in turn, a good heat transport is finally restored in the entire path. Taking such a freezing problem into consideration, the heat pipe 3 has a length of preferably less than or equal to 50 cm, particularly preferably less than or equal to 40 cm, and further preferably less than or equal to 30 cm.

Further, as a temperature adjusting mechanism, a cooling mechanism (in the present embodiment, water cooling jackets 14a, 14b as a part of the water cooling mechanism) may be connected to the heat transport apparatus in addition to the heater 40, and when the battery is overheated, the heat of the battery can be efficiently transported to the cooling mechanism by the heat pipe 3. Further, in the present embodiment, the heat pipes 3 are disposed in such a manner that number of heat pipes 3 of the group of heat pipes 11a constituting one end of the heat transport path is maximum (heat transport capability at one end of the heat transport path is maximum), and, a density of the heat pipes 3 of the group of heat pipes 11d constituting the other end of the heat transport path is minimum (heat transport capability at the other end of the heat transport path is minimum). At an intermediate portion (between the one end and the other end) of the heat transport path, the number of heat pipes does not increase from one end to the other end of the heat transport path (a heat transport capability does not increase) except at junction portions of the heat pipes. Thereby, it is possible to sufficiently deal with an amount of heat transport that increases towards the cooling mechanism side. Also, by providing the aforementioned thermal resistance member at a connecting portion of the heat pipes 3 which is near the cooling mechanism (e.g., a connecting portion between the heat pipes 3 constituting the group of heat pipes 11a and the heat pipes 3 constituting the group 11b in FIG. 10), a heat loss produced due to transportation of heat to the cooling mechanism during the heating of the battery cells 21 can be suppressed.

In the embodiment above, the groups (11a to 11d) each comprising two or one heat pipes/pipe are/is arranged, but it is not limited to such an arrangement, and various arrangements are possible. Also, the plurality of heat pipes 3 need not be necessarily identical, and those having different shapes (lengths, diameters) and different working fluids may be used in combination. Also, in the present embodiment, too, as shown in Fig. 8, the heat pipes of different length may be used, and a heat transport capability on the cooling mechanism side may be maximized by minimizing the length of the heat pipes 3 (11a) constituting one end of the heat transport path and maximizing the length of the heat pipes 3 (11d) constituting the other end of the heat transport path.

The heater described above may be, but not particularly limited to, an electric heater, a Peltier element, or the like, and the cooling mechanism may be a fin, a water-cooled mechanism, a heat pump or the like. In the aforementioned embodiment, a case in which the working fluids of the heat pipes 3 are the same was described. However, a combination of heat pipes of different working fluids may be used. Further, the heat pipes may be connected at tip end surfaces instead of being connected at end portion side surfaces. An object to be temperature adjusted is not limited to battery cells, and the heat transport apparatus of the present disclosure is applicable to various machines, appliances and devices requiring cooling and/or heating. Particularly, it is preferable for machines, appliances and devices having cold weather specification that assumes that an operating temperature may be 0 °C or below.

### [Embodiment 3]

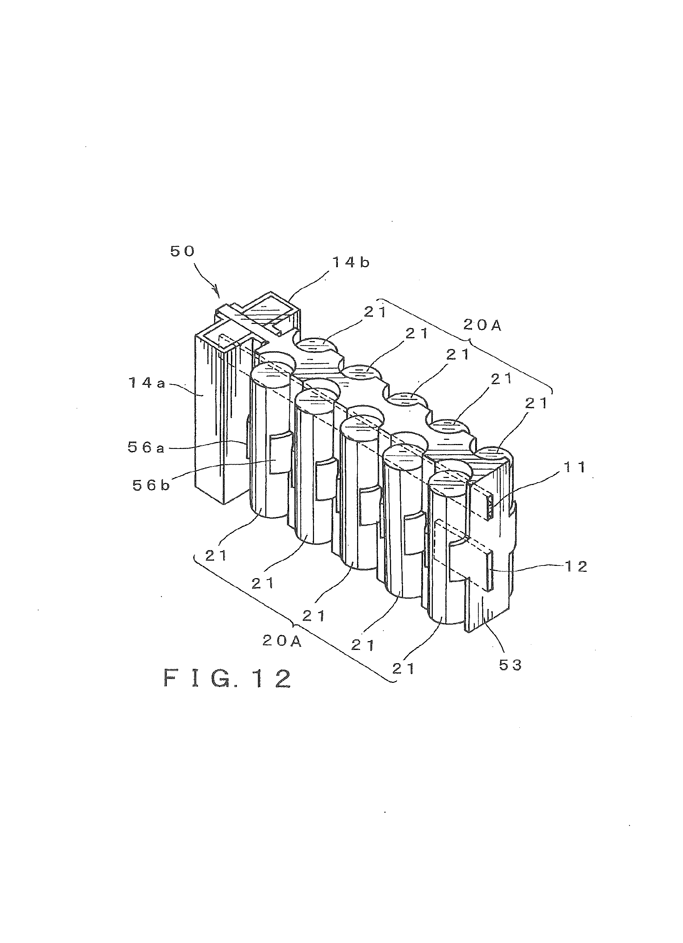

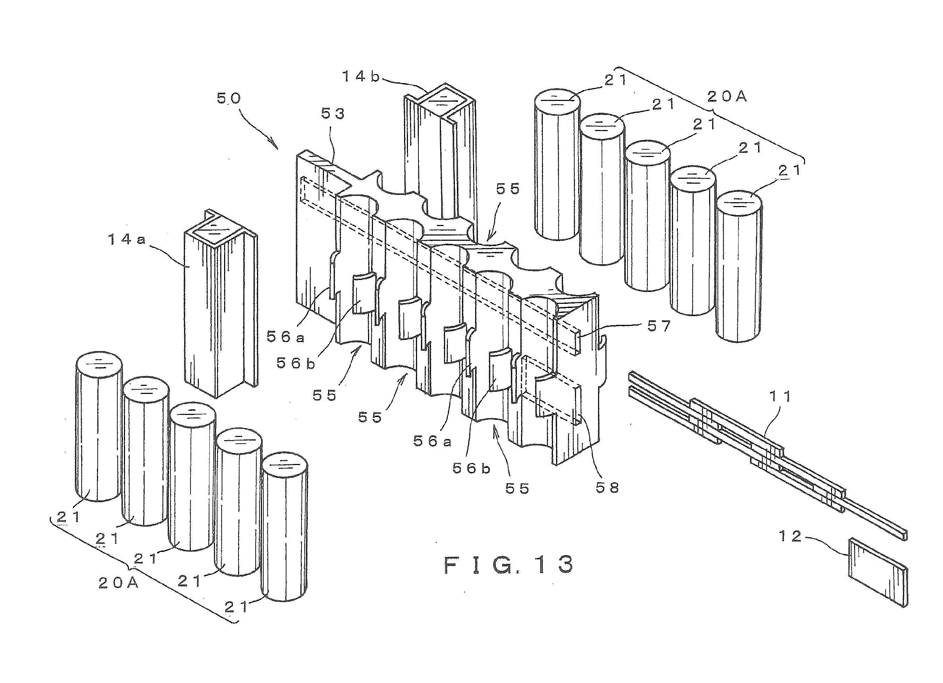

Next, an embodiment in which battery cells of other geometries are used instead of the aforementioned prismatic battery cells will be described with reference to FIGS. 12 and 13. FIG. 12 is a perspective view showing a state in which the heat transport apparatus 50 of the present disclosure is disposed between cylindrical battery cells 20. FIG. 13 is an exploded perspective view showing the heat transport apparatus 50 of FIG. 13. In FIGS. 12 and 13, members which are the same as those of the heat transport apparatus 10 are indicated with common reference numerals.

A securing section 53 of the heat transport apparatus 50 is provided with a heat pipe accommodating hole 57 and a heater accommodating hole 58 in which the heat pipes 11 and the heater 12 are accommodated, respectively. On each side surface of the fastening unit 53, concaved portions 55 each formed to match an outer peripheral shape of the battery cell 20 and a pair of latches 56a and 56b are formed. The battery cell 21 is retained in a state where it is fitted within the concaved portion 55 by the pair of latches 56a and 56b.

Similarly to the case of the heat transport apparatus 10' of Embodiment 2, jackets 14a and 14b are connected to an end portion of the securing section 53.

### [Embodiment 4]

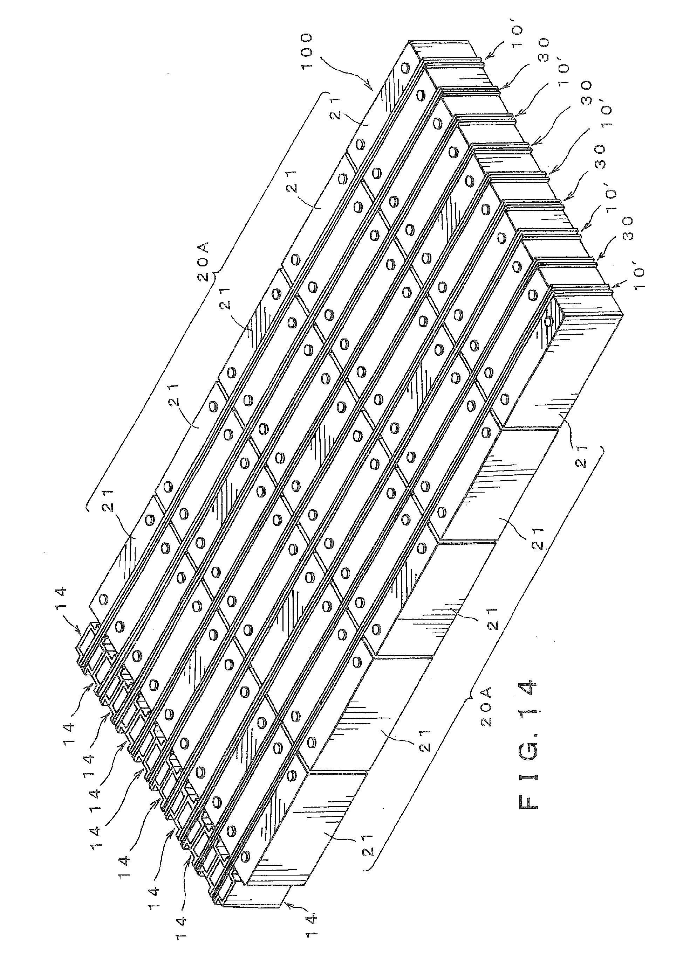

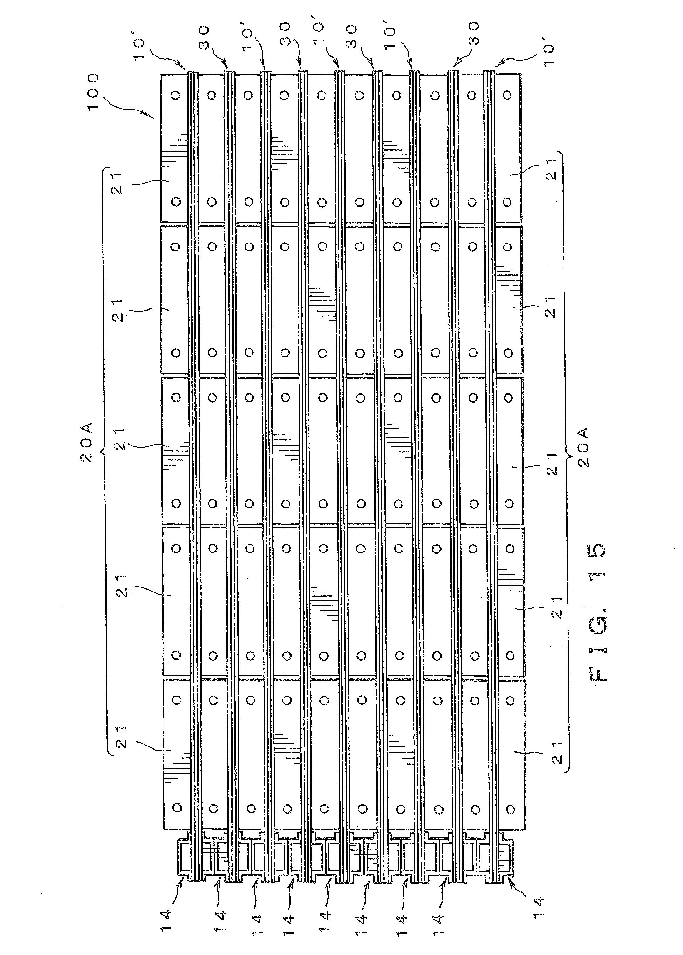

Another embodiment of a battery temperature adjustment apparatus comprising the heat transport apparatus of the present disclosure will now be described. A battery temperature adjustment apparatus 100 includes the heat transport apparatus 10' described in the aforementioned Embodiment 2. FIG. 14 is a perspective view showing the battery temperature adjustment apparatus 100. FIG. 15 is a top plan view thereof.

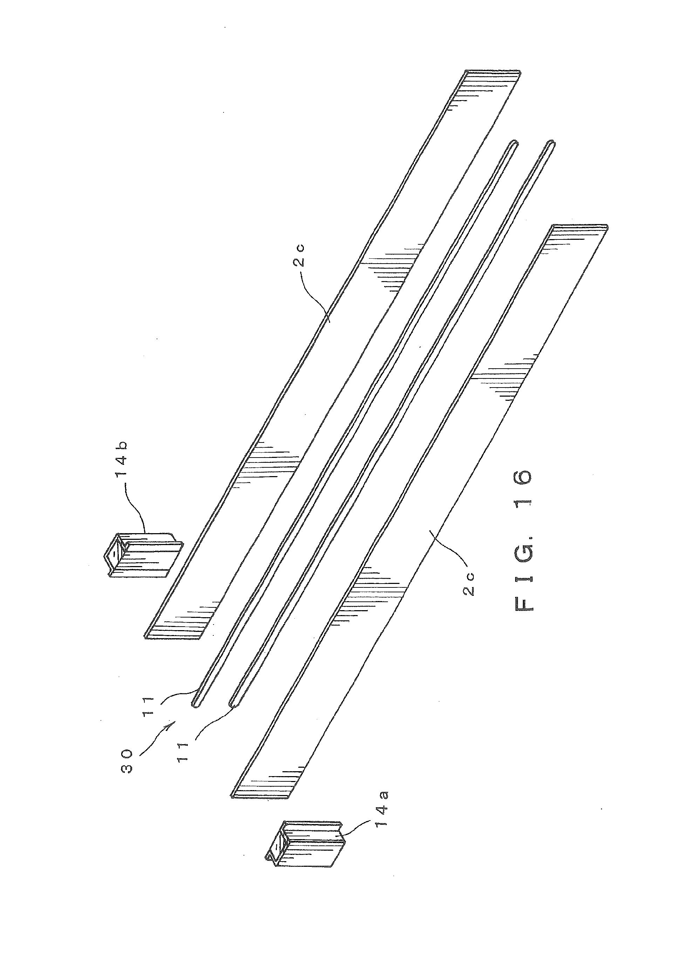

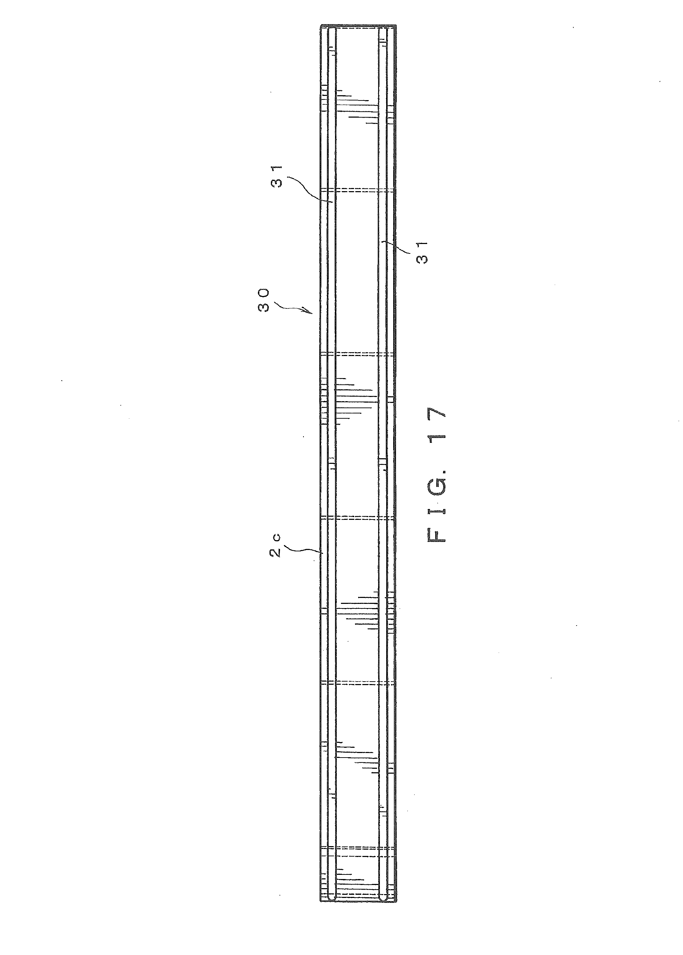

The battery temperature adjustment apparatus 100 includes the heat transport apparatus 10' of the present disclosure and a battery cooling unit 30. It is to be noted that the heat transport apparatus 10' includes the water-cooled jacket 14, and the heat pipe 11 is thermally connected to a cooling unit (water-cooled unit). The configuration of the battery cooling unit 30 is similar to the configuration of the heat transport apparatus 10' except that it is not provided with a heater and provided with two long heat pipes 31 as the heat pipes (see FIGS. 16 and 17).

In the battery temperature adjustment apparatus 100, the heat transport apparatus 10' and the battery cooling unit 30 are alternately disposed in a gap of battery component 20A. That is, the heat pipe 31 of the battery cooling unit 30 is thermally connected to a surface on the other side of the surface thermally connected to the heat transport apparatus 10' of the battery cell 20.

With an analysis by the present inventors, it is found that it is effective to perform cooling from both sides of the battery cell and it is sufficient to perform heating of the battery cell from one side. Accordingly, by using the battery temperature adjustment apparatus 100, the heating and the cooling of the battery can be performed efficiently and the weight of the apparatus can be decreased.

Note that, in the aforementioned battery temperature adjustment apparatus 100, the heat transport apparatus 10' and the battery cooling unit 30 are provided with the water-cooling jacket, but by connecting a fin instead of the water-cooling jacket, the configuration may be such that the heat pipe 11 and the heat pipe 31 are connected to the cooling unit (an external atmosphere or an air conditioning system). Although the water-cooling jacket or the fin can be provided one each for the heat transport apparatus 10' and 30, a plurality of units may share a single water-cooling jacket or a fin.

### List of Reference Signs

1a to 1g group of heat pipes
2 accommodating member
3 heat pipe
10 heat transport apparatus
20 group of battery cells
21 battery cell
30 sheet
40 temperature adjusting mechanism
5 thermal resistance member

## Claims

1. A heat transport apparatus that is thermally connectable to an object to be temperature adjusted, comprising:
a plurality of heat pipes thermally connected along a heat transport direction to form a heat transport path,
the heat transport apparatus being used under an environment at or below a melting point of a working fluid of at least one heat pipe among the plurality of heat pipes.

2. The heat transport apparatus according to claim 1, wherein one end of the heat transport path is thermally connected to a temperature adjusting mechanism, and types and/or numbers of the heat pipes are selected in such a manner that a heat transport capability at the one end is greater than a heat transport capability at another end.

3. The heat transport apparatus according to claim 1 or 2, further comprising a heater thermally connected to at least one of the plurality of heat pipes.

4. The heat transport apparatus according to any one of claims 1 to 3, wherein a part of or an entirety of the heat transport path is accommodated in an accommodating member that is thermally connectable to the plurality of heat pipes and the object to be temperature adjusted.

5. The heat transport apparatus according to any one of claims 1 to 4, wherein a working fluid of at least one heat pipe among the plurality of heat pipes has a melting point different from a melting point of that of the other heat pipe.

6. The heat transport apparatus according to any one of claims 1 to 5, wherein neighboring heat pipes are thermally connected by thermally connecting end portion side surfaces thereof with each other.

7. The heat transport apparatus according to any one of claims 1 to 5, wherein neighboring heat pipes are thermally connected by thermally connecting tip end surfaces thereof with each other.

8. The heat transport apparatus according to any one of claims 1 to 7, wherein the object to be temperature adjusted represents a plurality of objects to be temperature adjusted.

9. The heat transport apparatus according to claim 8, wherein the plurality of objects to be temperature adjusted are a plurality of battery cells.
